# EUROPÄISCHE PATENTSCHRIFT

(11) **EP 4 403 805 B1**
(45) Veröffentlichungstag und Bekanntmachung des Hinweises auf die Patenterteilung: **01.07.2026**
(21) Anmeldenummer: 24150381.2
(22) Anmeldetag: 04.01.2024
(51) Int. Cl.: F16K 11/044, F16K 15/18, F16K 31/00, F16K 31/06, F16K 31/08, F16K 37/00, F16K 51/02, B25J 15/06

(54) **VENTILVORRICHTUNG UND UNTERDRUCKHANDHABUNGSVORRICHTUNG MIT VENTILVORRICHTUNG**
VALVE DEVICE AND NEGATIVE-PRESSURE HANDLING DEVICE WITH VALVE DEVICE
DISPOSITIF DE SOUPAPE ET DISPOSITIF DE MANIPULATION PAR DÉPRESSION AVEC DISPOSITIF DE SOUPAPE

(30) Priorität: 18.01.2023 DE 102023101130
(43) Veröffentlichungstag der Anmeldung: 24.07.2024
(73) Patentinhaber: J. Schmalz GmbH, 72293 Glatten (DE)
(72) Erfinder: Gauß, Jan, 72202 Nagold (DE)
(74) Vertreter: DREISS Patentanwälte PartG mbB

(56) Entgegenhaltungen:
- CN-U- 208 221 717
- DE-A1- 102018 217 103
- DE-A1- 3 508 151
- US-A1- 2010 163 766
- US-A1- 2021 371 214
- US-B2- 11 549 502
- US-B2- 8 678 776

## Beschreibung

Die Erfindung betrifft eine Ventilvorrichtung für Unterdruckanwendungen sowie eine Unterdruckhandhabungsvorrichtung mit einer solchen Ventilvorrichtung.

Unterdruckhandhabungsvorrichtungen dienen zum Greifen und Handhaben von Gegenständen mittels Unterdruck. Solche Unterdruckhandhabungsvorrichtungen finden in einer Vielzahl von Anwendungsbereichen Verwendung und umfassen üblicherweise eine oder mehrere Sauggreifvorrichtungen zum Ansaugen eines Gegenstandes sowie eine die Sauggreifvorrichtungen mit Unterdruck versorgende Unterdruckerzeugungseinrichtung. Die Sauggreifvorrichtung kann insbesondere an einem Manipulator, beispielsweise an einem Roboter, gehaltert und von diesem verlagerbar sein.

Um eine Unterdruckversorgung der Sauggreifvorrichtungen und somit einen Greifvorgang zu steuern, sind in der Regel Ventilvorrichtungen vorgesehen, welche eine Fluidverbindung zwischen Unterdruckerzeugungseinrichtung und Sauggreifvorrichtung bedarfsweise herstellen oder unterbinden. Die bekannten Ventilvorrichtungen sind üblicherweise pneumatisch, insbesondere mittels Druckluft, angesteuert. Eine solche Druckluftsteuerung macht es jedoch erforderlich, ein vergleichsweise kostenintensives und energieintensives Druckluftversorgungsnetz vorzuhalten. Zudem ist eine Druckluftversorgung nicht immer oder nur mit großem Aufwand realisierbar, beispielsweise bei mobilen Unterdruckhandhabungsvorrichtungen (z.B. fahrerlose Transportsysteme, Shuttles, batteriebetriebene Systeme).

Weiteres Verbesserungspotential ergibt sich bei den bekannten Unterdruckhandhabungsvorrichtungen dahingehend, dass die Sauggreifvorrichtungen oftmals nicht einzeln sensorisch überwacht werden, sondern lediglich der gemeinsame Unterdruckkreis. Dies hat den Nachteil, dass beispielsweise nicht zweifelsfrei identifiziert werden kann, an welchem der Sauggreifvorrichtungen eine Störung, z.B. eine Leckage, auftritt.

Aus der DE 10 2018 217 103 A1 ist eine Ventilvorrichtung zur Steuerung einer Gasströmung bekannt mit einem Gehäuse, in dem ein eine Einlassöffnung und eine Auslassöffnung verbindender Strömungskanal ausgebildet ist. Im Gehäuse ist ein Ventilelement beweglich angeordnet, an dem eine erste Dichtfläche ausgebildet ist, mit der das Ventilelement in einer Schließstellung an einem ersten Ventilsitz anliegt und in dieser Schließstellung den Strömungskanal verschließt. Mit einem Betätigungselement, welches durch eine Aussparung im Gehäuse greift, ist das Ventilelement bewegbar. Am Ventilelement ist eine zweite Dichtfläche ausgebildet, mit der das Ventilelement mit einem zweiten Ventilsitz zur Abdichtung der Aussparung gegenüber dem Strömungskanal zusammenwirkt.

Aus der DE 35 08 151 A1 ist eine Schnellschlussventil zum Abdichten von Fluid- oder Vakuumleitungen bekannt. Aus der US 2010/163766 A1 ist ein bistabiles Ventil bekannt. Aus der CN 208 221 717 U ist ein elektromagnetisches Ventil bekannt.

Der Erfindung liegt die Aufgabe zugrunde, die Nachteile aus dem Stand der Technik zu überwinden. Insbesondere liegt der Erfindung die Aufgabe zugrunde, eine Ventilvorrichtung bereitzustellen, welche kompakt aufgebaut ist, eine zuverlässige, schnelle und energieeffiziente Steuerung einer Unterdruckversorgung ermöglicht und zudem betriebssicher ist.

Diese Aufgabe wird erfindungsgemäß durch eine Ventilvorrichtung mit den Merkmalen des Anspruchs 1 gelöst. Die Ventilvorrichtung ist für Unterdruckanwendungen ausgebildet, insbesondere zum Zu- oder Wegschalten einer Unterdruckversorgung. Insofern kann es sich bei der Ventilvorrichtung insbesondere um ein Umschaltventil zum Zu- oder Wegschalten einer Unterdruckversorgung, weiter insbesondere um ein Steuerventil zum Steuern einer Unterdruckversorgung handeln.

Die Ventilvorrichtung umfasst ein Ventilgehäuse, welches eine Ventilkammer begrenzt. Insbesondere schließt das Ventilgehäuse einen die Ventilkammer bildenden Ventilinnenraum ein. Die Ventilkammer umfasst eine Unterdruckversorgungsöffnung. Die Unterdruckversorgungsöffnung ist mit einem Unterdruckanschluss zum Anschluss einer externen Unterdruckversorgung, insbesondere einer Unterdruckerzeugungseinrichtung, strömungsverbunden. Insbesondere kann zwischen Unterdruckversorgungsöffnung und Unterdruckanschluss ein Strömungskanal, vorzugsweise in dem Ventilgehäuse, vorgesehen sein. Der Unterdruckanschluss kann beispielsweise als Stecktülle ausgebildet sein oder ein Einschraubgewinde umfassen.

Die Ventilkammer umfasst außerdem eine Saugöffnung. Die Saugöffnung ist mit einem Sauganschluss zum Anschluss einer Sauggreifvorrichtung strömungsverbunden. Insbesondere kann zwischen Saugöffnung und Sauganschluss ein Strömungskanal, vorzugsweise in dem Ventilgehäuse, vorgesehen sein. Der Sauganschluss kann zur, insbesondere direkten, Verbindung mit einem Sauger, beispielsweise Elastomersauger, der Sauggreifvorrichtung ausgebildet sein. Es ist auch denkbar, dass der Sauganschluss zur Verbindung mit einer Unterdruck-Verteilerleitung der Sauggreifvorrichtung ausgebildet ist. Der Sauganschluss kann beispielsweise als Stecktülle ausgebildet sein oder ein Einschraubgewinde umfassen. Darüber hinaus kann der Sauganschluss einen Schutzfilter, insbesondere ein Einpress-Schutzfilter, aufweisen.

Die Ventilkammer umfasst außerdem eine Belüftungsöffnung zum Belüften der Ventilkammer. Die Belüftungsöffnung ist vorzugsweise mit einer Umgebung der Ventilvorrichtung strömungsverbunden, sodass zum Belüften Umgebungsluft in die Ventilkammer einströmen kann.

Die Ventilvorrichtung umfasst außerdem einen Ventilkörper, welcher in der Ventilkammer angeordnet ist und entlang einer Schaltachse zwischen einer Saugstellung und einer Belüftungsstellung verlagerbar ist. Der Ventilkörper ist derart ausgebildet, dass er in der Saugstellung die Belüftungsöffnung verschließt, also abdichtet, und insbesondere eine Strömungsverbindung zwischen Unterdruckversorgungsöffnung und Saugöffnung freigibt. In der Saugstellung kann insofern die Ventilkammer und somit die Saugöffnung und der Sauganschluss mit Unterdruck beaufschlagt werden.

Der Ventilkörper ist derart ausgebildet, dass er in der Belüftungsstellung die Unterdruckversorgungsöffnung verschließt, also abdichtet, und insbesondere eine Strömungsverbindung zwischen der Belüftungsöffnung und der Saugöffnung freigibt. Insofern kann die Ventilkammer über die Belüftungsöffnung belüftet werden, insbesondere ein in der Ventilkammer vorherrschender Unterdruck abgebaut werden, vorzugsweise durch Einströmen von Umgebungsluft durch die Belüftungsöffnung.

Die Ventilvorrichtung kann insbesondere einen ersten Ventilsitz aufweisen, an welchem der Ventilkörper in der Saugstellung anliegt und einen zweiten Ventilsitz, an welchem der Ventilkörper in der Belüftungsstellung anliegt. Der erste und/oder der zweite Ventilsitz können bspw. als Tellersitz, Flachsitz oder Kugelsitz ausgebildet sein.

Die Ventilvorrichtung umfasst außerdem einen Aktor zum Antreiben einer Verlagerungsbewegung des Ventilkörpers entlang der Schaltachse zwischen der Saugstellung und der Belüftungsstellung.

Der Aktor umfasst einen mit dem Ventilkörper verbundenen Anker, insbesondere Magnetanker, welcher entlang der Schaltachse verlagerbar ist. Insbesondere umfasst der Anker ein magnetisch polarisierbares, vorzugsweise ferromagnetisches, Material. Der Anker kann ein- oder mehrteilig ausgebildet sein. Der Anker kann einstückig, insbesondere monolithisch, mit dem Ventilkörper ausgebildet sein. Der Anker ist vorzugsweise in einer Laufhülse im Ventilgehäuse und/oder im Aktor geführt.

Der Aktor umfasst außerdem eine elektromagnetische Spule zum Antreiben einer Verlagerungsbewegung des Ankers und somit des Ventilkörpers entlang der Schaltachse. Insbesondere ist der Anker und somit der Ventilkörper durch Bestromen der elektromagnetischen Spule entlang der Schaltachse verlagerbar.

Der Aktor ist bistabil ausgebildet. Insbesondere umfasst der Aktor Einrichtungen, mittels derer der Anker in einer jeweiligen Endlage fixiert ist. Wie nachfolgend noch im Detail erläutert kann der Aktor beispielsweise eine Federeinrichtung und/oder einen oder mehrere Permanentmagneten umfassen.

Die Ventilvorrichtung umfasst außerdem eine Rückschlagklappe zum Öffnen und Schließen der Unterdruckversorgungsöffnung. Die Rückschlagklappe ist derart ausgebildet und angeordnet, dass sie eine Geschlossenstellung, in welcher die Unterdruckversorgungsöffnung durch die Rückschlagklappe abgedeckt ist, und eine Offenstellung, in welcher die Unterdruckversorgungsöffnung zumindest abschnittsweise geöffnet ist, einnehmen kann. Insbesondere ist die Rückschlagklappe ausgehend von der Geschlossenstellung in Richtung Offenstellung von der Ventilkammer weg auf- bzw. wegklappbar. Die Rückschlagklappe ist derart ausgebildet und angeordnet, dass sie durch Beaufschlagen des Unterdruckanschlusses mit Unterdruck, insbesondere durch den damit verbundenen Luftstrom von Unterdruckversorgungsöffnung zu Unterdruckanschluss, in die Offenstellung überführbar ist, insbesondere in Richtung von der Ventilkammer weg aufklappbar ist.

Die vorgeschlagene Ventilvorrichtung mit Rückschlagklappe ermöglicht eine zuverlässige und betriebssichere Funktion. Insbesondere kann durch die Rückschlagklappe eine Sicherheitsfunktion realisiert werden, da auch bei Energieausfall oder einem Abfall des Unterdrucks an dem Unterdruckanschluss (z.B. durch einen Defekt oder Energieausfall an der Unterdruckerzeugungseinrichtung) der Unterdruck in der Ventilkammer und somit in einer mit der Ventilvorrichtung verbundenen Sauggreifvorrichtung aufrechterhalten bleiben kann. Diese Sicherheitsfunktion wird zudem durch die Ausgestaltung des Aktors als bistabiler Aktor unterstützt, wodurch der Ventilkörper in seinen beiden Endlagen, Saugstellung und Belüftungsstellung, fixiert bleibt, ohne dass die Spule hierfür bestromt werden muss. Auf diese Weise kann der Ventilkörper auch bei Energieausfall in der jeweiligen Schaltstellung sicher gehalten werden. Die vorgeschlagene Ausgestaltung mit elektrisch ansteuerbarem Aktor ermöglicht zudem ein besonders schnelles und energieeffizientes Schalten der Ventilvorrichtung, insbesondere ohne dass eine zusätzliche Druckluftversorgung erforderlich ist. Dadurch, dass der Aktor bistabil ausgebildet ist, muss die Spule ausschließlich beim Umschalten zwischen Saugstellung und Belüftungsstellung bestromt werden. Der Aktor kann daher vergleichsweise kompakt ausgebildet sein, da die Spule - aufgrund der lediglich kurzzeitigen Bestromung beim Umschalten - stark überstromt werden kann ohne dabei zu überhitzen.

Die Rückschlagklappe kann insbesondere in dem Ventilgehäuse angeordnet sein. Insofern kann die Rückschlagklappe von Umgebungseinflüssen geschützt sein, was eine zuverlässige Funktion der Ventilvorrichtung begünstigt. Die Rückschlagklappe ist vorzugsweise außerhalb der Ventilkammer angeordnet. Insbesondere kann die Rückschlagklappe in einer Strömungsverbindung, bspw. einem Strömungskanal, zwischen Unterdruckversorgungsöffnung und Unterdruckanschluss angeordnet sein. Beispielsweise ist es denkbar, dass die Rückschlagklappe an einer Außenseite einer die Ventilkammer begrenzenden Wandung angeordnet ist, insbesondere derart, dass die Rückschlagklappe durch den Strömungsdruck infolge einer Beaufschlagung des Unterdruckanschlusses mit Unterdruck zumindest abschnittsweise von der Wandung abhebbar ist. Die Rückschlagklappe kann aus einem Elastomer gebildet sein. Die Rückschlagklappe kann auch Kugel-Rückschlagventil ausgebildet sein.

Das Ventilgehäuse kann einteilig, insbesondere einstückig ausgebildet sein. Das Ventilgehäuse kann auch mehrteilig ausgebildet sein. Im Rahmen einer vorteilhaften Weiterbildung kann die Ventilvorrichtung ein Innengehäuse aufweisen, welches die Ventilkammer begrenzt, und ein Außengehäuse, welches den Unterdruckanschluss und den Sauganschluss bereitstellt. Insbesondere kann das Außengehäuse das Innengehäuse nach außen hin begrenzen, vorzugsweise einschließen. In diesem Zusammenhang ist es beispielsweise denkbar, dass das Innengehäuse und die Ventilkammer Teil eines Cartridge-Ventils sind, welches in ein Außengehäuse eingesteckt ist. Bei dem Außengehäuse kann es sich beispielsweise um ein Spritzguss-Teil handeln.

Bei einer Ausgestaltung der Ventilvorrichtung mit Innengehäuse kann die Rückschlagklappe dann bspw. an einer Außenwand des Innengehäuses angeordnet sein, insbesondere derart, dass die Rückschlagklappe durch einen Strömungsdruck infolge einer Beaufschlagung des Unterdruckanschlusses mit Unterdruck zumindest abschnittsweise von der Außenwand abhebbar ist, insbesondere in Richtung von der Ventilkammer weg. Das Außengehäuse kann optional einen Anschlag für die Rückschlagklappe bilden.

Erfindungsgemäß ist der Aktor derart, insbesondere in dem Ventilgehäuse, angeordnet, dass der Anker durch die Belüftungsöffnung in die Ventilkammer eindringt. Eine solche Ausgestaltung kann eine Abdichtung erleichtern, da kein zusätzlicher Dichtring zur Abdichtung des Ankers erforderlich ist. Auf diese Weise können zudem Reibkräfte beim Bewegen des Ankers reduziert werden, was die erforderlichen Schaltkräfte reduziert. Somit kann der Aktor besonders klein dimensioniert werden, was die Gesamtabmessungen der Ventilvorrichtung weiter reduziert. Insbesondere kann die Belüftungsöffnung koaxial zur Schaltachse angeordnet sein.

Erfindungsgemäß ist der Anker im Bereich der Belüftungsöffnung derart radial verjüngt, dass zwischen dem Anker und einem die Belüftungsöffnung begrenzenden Wandabschnitt des Ventilgehäuses, bspw. des Innengehäuses, ein Belüftungsspalt gebildet ist, welcher den Anker radial um die Schaltachse, insbesondere vollständig, umläuft. Insofern ist die Belüftungsöffnung derart ausgebildet, dass Umgebungsluft um den Anker in die Ventilkammer einströmen kann. Eine solche Ausgestaltung ermöglicht es, der Ventilkammer vergleichsweise hohe Luftvolumina bei geringem Bauraum zuzuführen, was ein schnelles Schalten (insbesondere zum Ablegen eines an einer Sauggreifvorrichtung gehaltenen Gegenstands) und gleichzeitig einen kompakten Aufbau begünstigt.

Darüber hinaus kann es vorteilhaft sein, wenn die Belüftungsöffnung mit einem atmosphärischen Belüftungsanschluss strömungsverbunden ist, welcher den Anker um die Schaltachse umschließt. Der Belüftungsanschluss kann in vorteilhafter Weise entlang der Schaltachse zwischen Ventilkammer und Spule angeordnet sein.

Im Rahmen einer vorteilhaften Weiterbildung kann der Belüftungsanschluss einen, insbesondere integrierten, Filter umfassen, welcher die Schaltachse, insbesondere den Anker, radial umschließt. Vorzugsweise kann der Filter in Form eines Filterzylinders ausgebildet sein. Insbesondere können Filterzylinder und Anker koaxial zur Schaltachse angeordnet sein.

Vorzugsweise umfasst der Filter, bzw. der Filterzylinder, eine Filtermantelfläche und eine mit der Belüftungsöffnung kommunizierende, insbesondere strömungsverbundene, axiale Filteröffnung (Zylinderöffnung). Dann kann der Anker die Zylinderöffnung durchdringen. Im Rahmen einer vorteilhaften Weiterbildung kann das Ventilgehäuse im Bereich des Filters eine Aussparung derart aufweisen, dass die Filtermantelfläche entlang eines Großteils ihres Umfangs um die Schaltachse, vorzugsweise entlang ihres kompletten Umfangs um die Schaltachse, von Umgebungsluft durchströmbar ist. Auf diese Weise ist bei vergleichsweise geringem Bauraum eine große Luftdurchtrittsfläche gebildet.

Eine besonders vorteilhafte Anordnung der Ventilöffnungen kann sich dann ergeben, wenn die Unterdruckversorgungsöffnung und die Belüftungsöffnung einander gegenüberliegend an der Ventilkammer angeordnet sind. Vorzugsweise sind die Belüftungsöffnung und die Unterdruckversorgungsöffnung koaxial zur Schaltachse angeordnet. Dies ermöglicht eine einfache Linearführung des Ventilkörpers. Darüber hinaus kann es vorteilhaft sein, wenn die Unterdruckversorgungsöffnung und die Saugöffnung zueinander orthogonal versetzt angeordnet sind.

Im Rahmen einer vorteilhaften Weiterbildung kann die bistabile Ausgestaltung des Aktors durch Vorsehen einer Federeinrichtung und eines Permanentmagneten realisiert sein. Im Konkreten kann der Aktor eine Federeinrichtung umfassen, welche den Anker entlang der Schaltachse beaufschlagt, und einen Permanentmagnet, welcher den Aktor entgegen der Beaufschlagung durch die Federeinrichtung in der Saugstellung oder in der Belüftungsstellung festhält. Eine solche Ausgestaltung ermöglicht auch bei Energieausfall die Ventilvorrichtung in einem sicheren Ventilzustand (Saugstellung oder Belüftungsstellung) zu halten. Vorzugsweise ist die Federeinrichtung dazu ausgebildet, den Anker in Richtung der Belüftungsstellung des Ventilkörpers zu beaufschlagen. Dann kann der Permanentmagnet dazu ausgebildet sein, den Anker in der Saugstellung entgegen der Beaufschlagung durch die Federeinrichtung festzuhalten. Vorzugsweise ist der Permanentmagnet derart ausgebildet und angeordnet, dass eine in der Saugstellung auf den Anker ausgeübte magnetische Haltekraft größer ist als die Summe aus Federkraft durch die Federeinrichtung und Saugkraft infolge eines an der Unterdruckversorgungsöffnung anliegenden Unterdrucks.

In vorteilhafter Weise kann der Permanentmagnet in Eisen eingefasst sein und/oder in einem Spuleninnenraum der Spule angeordnet sein. Auf diese Weise kann eine magnetische Kraftwirkung sowie eine mechanische Stabilität beim Aufschlagen des Ankers verbessert werden. Zudem ermöglicht eine Anordnung im Inneren der Spule einen besonders kompakten Aufbau des Aktors.

Darüber hinaus kann es vorteilhaft sein, wenn die Federeinrichtung und der Permanentmagnet, insbesondere und die Spule, außerhalb der Ventilkammer angeordnet sind. Die Ventilkammer kann insofern besonders klein ausgebildet sein, was Totvolumina und somit Schaltzeiten reduziert (da weniger Volumen evakuiert abgesaugt oder belüftet werden muss).

Im Rahmen einer alternativen vorteilhaften Ausgestaltung kann zur Realisierung der bistabilen Ausgestaltung des Aktors der Aktor einen ersten Permanentmagnet umfassen, welcher den Anker in der Saugstellung festhält, und einen zweiten Permanentmagnet, welcher den Anker in der Belüftungsstellung festhält. Bei einer solchen Ausgestaltung kann dann die Federeinrichtung optional entfallen.

Im Rahmen einer weiteren alternativen vorteilhaften Ausgestaltung kann zur Realisierung der bistabilen Ausgestaltung des Aktors der Aktor einen Permanentmagneten und einen oder mehrere Flussleitstrukturen, insbesondere Magnetbügel, zur Leitung eines magnetischen Flusses des Permanentmagneten umfassen. Insbesondere kann die wenigstens eine Flussleitstruktur dazu ausgebildet, ein Magnetfeld des Permanentmagneten derart zu lenken, dass in einer oder beiden Endlagen des Ankers (Saugstellung und/oder Belüftungsstellung) eine magnetische Haltekraft auf den Anker ausgeübt wird, die der Anker gegen ein Verschieben aus der Endlage festhält. Der Permanentmagnet kann vorzugsweise mittig in Bezug auf eine Längserstreckung des Ankers entlang der Schaltachse angeordnet sein. Der Permanentmagnet kann zudem den Anker um die Schaltachse umschließen.

Im Rahmen eines allgemeinen Aspekts kann die Ventilvorrichtung außerdem eine Sensoreinrichtung umfassen. Vorzugsweise ist die Sensoreinrichtung in dem Ventilgehäuse, beispielsweise in dem Außengehäuse, angeordnet. Die Sensoreinrichtung kann insbesondere dazu ausgebildet sein, einen in der Ventilkammer vorherrschenden Druck zu detektieren. Dann kann die Ventilkammer eine mit der Sensoreinrichtung strömungsverbundene Sensoröffnung aufweisen.

Darüber hinaus kann die Ventilvorrichtung eine, insbesondere mit der Sensoreinrichtung zusammenwirkende, Ventil-Steuereinrichtung, insbesondere Steuerplatine, aufweisen. Die Ventil-Steuereinrichtung ist insbesondere dazu eingerichtet, den Aktor, insbesondere die Spule, anzusteuern, insbesondere Abhängigkeit eines Signals der Sensoreinrichtung. Die Ventil-Steuereinrichtung, insbesondere Steuerplatine, ist vorzugsweise in dem Ventilgehäuse angeordnet.

Die Ventilvorrichtung kann außerdem eine mit der Sensoreinrichtung und/oder der Ventil-Steuereinrichtung zusammenwirkende Auswerteeinrichtung umfassen. Die Auswerteeinrichtung kann insbesondere dazu ausgebildet sein, in Abhängigkeit eines von der Sensoreinrichtung detektierten Drucks in der Ventilkammer ein Signal zu erzeugen, welches einen Ansaugzustand einer an dem Sauganschluss angeschlossenen Sauggreifvorrichtung repräsentiert. Insbesondere istdie Auswerteeinrichtung dazu eingerichtet, einen von der Sensoreinrichtung detektierten Druck in der Ventilkammer mit einem in der Auswerteeinrichtung hinterlegten oder hinterlegbaren Druck-Schwellwert zu vergleichen und in Abhängigkeit davon, ob der Druck in der Ventilkammer den Druck-Schwellwert unterschreitet oder übersteigt, ein entsprechendes Signal zu erzeugen. Zum Beispiel kann dann, wenn ein in der Ventilkammer vorherrschender Absolutdruck kleiner ist als der Druck-Schwellwert (Unterdruck ausreichend groß), ein Signal erzeugt werden, welches darüber informiert, dass ein Gegenstand von der Sauggreifvorrichtung sicher gehalten ist, und dann, wenn der Absolutdruck größer ist als der Druck-Schwellwert (Unterdruck zu niedrig), ein Signal erzeugt werden, welches darüber informiert, dass der Gegenstand nicht mehr oder nicht mehr zuverlässig von der Sauggreifvorrichtung angesaugt ist. Auf diese Weise ist eine Zustandsüberwachung möglich.

Zusätzlich oder alternativ kann die Auswerteeinrichtung dazu eingerichtet sein, in Abhängigkeit eines von der Sensoreinrichtung bereitgestellten Sensorsignals ein Auswertesignal zu erzeugen, welches die Sensoreinrichtung dazu veranlasst, den Aktor, insbesondere die Spule, anzusteuern. Beispielsweise ist es denkbar, dass die Auswerteeinrichtung dazu eingerichtet ist, ein von der Sensoreinrichtung bereitgestelltes Sensorsignal, welches einen Druck in der Ventilkammer repräsentiert, dahingehend zu analysieren, ob der in der Ventilkammer vorherrschende Druck einen in der Auswerteeinrichtung hinterlegten oder hinterlegbaren Druck-Schwellwert unterschreitet oder übersteigt. Zum Beispiel kann dann, wenn ein in der Ventilkammer vorherrschender (Absolut-)Druck größer ist als der Druck-Schwellwert (Unterdruck zu niedrig), ein Auswertesignal erzeugt werden, welches die Ventil-Steuereinrichtung dazu veranlasst, den Aktor derart anzusteuern, dass der Ventilkörper in die Belüftungsstellung überführt wird.

Die Ventilvorrichtung umfasst insbesondere eine mit der Sensoreinrichtung und/oder der Auswerteeinrichtung zusammenwirkende Ventil-Steuereinrichtung, insbesondere Steuerplatine, welche in dem Ventilgehäuse angeordnet ist und welche dazu ausgebildet ist, den Aktor anzusteuern, insbesondere in Abhängigkeit eines Signals der Sensoreinrichtung und/oder der Auswerteeinrichtung

Darüber hinaus ist es denkbar, dass die Ventilvorrichtung zusätzlich zu der vorstehend beschriebenen Sensoreinrichtung weitere Sensoren zum Erfassen von Prozess- und/oder Zustandsdaten der Ventilvorrichtung umfasst, beispielsweise einen Temperatursensor, einen Spannungssensor, einen Stromsensor an der Spule und/oder einen Anker-Positionssensor (z.B. taktiler Sensor oder Hall-Sensor). Dann kann die Auswerteeinrichtung dazu ausgebildet sein, von der Sensoreinrichtung und/oder einem oder mehreren der weiteren Sensoren ermittelte Daten auszuwerten und beispielsweise daraus einen Verschmutzungs- oder Verschleißzustand zu ermitteln (beispielsweise durch Erfassen einer sich über einen Zeitraum verändernden Schaltzeit der Ventilvorrichtung).

Die Ventilvorrichtung kann außerdem eine oder mehrere Zustandsanzeigen, beispielsweise in Form von Leuchtanzeigen (z.B. LEDs oder Displays), umfassen. Die Zustandsanzeigen können beispielsweise dazu ausgebildet sein, einem Bediener verschiedene Zustands- oder Prozessinformationen anzuzeigen, z.B. einen Einschaltzustand des Ventils, einen Fehlerzustand, einen Schaltzustand des Ventils, einen Ansaugzustand eines an dem der Sauggreifvorrichtung gehaltenen Werkstücks und/oder einen aktuellen Unterdruckwert in der Ventilkammer.

Die Ventilvorrichtung kann außerdem eine Kommunikationsschnittstelle umfassen. Die Kommunikationsschnittstelle kann dazu eingerichtet sein, von der Sensoreinrichtung, der Ventil-Steuereinrichtung und/oder der Auswerteeinrichtung bereitgestellte Informationen, insbesondere Prozess- und Zustandsinformationen der Ventilvorrichtung, an eine externe Auswerte- oder Steuereinheit zu übermitteln und/oder Informationen, bspw. Steuersignale oder Einstellwerte für die Druck-Schwellwerte, von einer externen Auswerte- oder Steuereinheit zu empfangen. Die Kommunikationsschnittstelle kann für eine drahtlose Kommunikation, beispielsweise über eine NFC-Schnittstelle, und/oder für eine kabelgebundene Kommunikation ausgebildet sein.

Die vorstehend genannte Aufgabe wird auch durch eine Unterdruckhandhabungsvorrichtung, umfassend eine Unterdruckerzeugungseinrichtung und eine oder mehrere Greifereinrichtungen, gelöst. Jede der Greifereinrichtungen umfasst eine Sauggreifvorrichtung und eine vorstehend beschriebene Ventilvorrichtung. Jeder Sauggreifvorrichtung ist eine Ventilvorrichtung zugeordnet. Jede Sauggreifvorrichtung ist mit dem Sauganschluss der ihr zugeordneten Ventilvorrichtung strömungsverbunden. Jede Ventilvorrichtung ist mit der gemeinsamen Unterdruckerzeugungseinrichtung strömungsverbunden. Insbesondere ist die Unterdruckerzeugungseinrichtung über eine jeweilige Fluidleitung mit dem Unterdruckanschluss einer jeweiligen Ventilvorrichtung strömungsverbunden.

In diesem Zusammenhang hat es sich als besonders vorteilhaft herausgestellt, wenn die Ventilvorrichtung näher an der ihr zugeordneten Sauggreifvorrichtung angeordnet ist als an der Unterdruckerzeugungseinrichtung. Auf diese Weise können Totvolumina zwischen Ventilvorrichtung und Sauggreifvorrichtung reduziert werden, was sich positiv auf die Schaltzeiten auswirkt (weniger Volumen muss beim Umschalten abgesagt oder belüftet werden).

Jede Ventilvorrichtung ist zudem über eine, insbesondere jeweilige, Kommunikationsverbindung, mit der Unterdruckerzeugungseinrichtung verbunden, insbesondere datentechnisch. Beispielsweise kann die Unterdruckerzeugungseinrichtung über die vorstehend erwähnte Kommunikationsschnittstelle einer jeweiligen Ventilvorrichtung kommunizieren.

Die Sauggreifvorrichtung kann beispielsweise ein Einzelsauger, ein Flächensauggreifer oder eine Saugerspinne sein.

Im Rahmen einer vorteilhaften Weiterbildung kann die Unterdruckerzeugungseinrichtung eine Hauptsteuereinrichtung aufweisen. Die Hauptsteuereinrichtung kann insbesondere dazu eingerichtet sein, Prozess- und/oder Zustandsdaten der Ventilvorrichtungen datentechnisch zu verarbeiten, insbesondere auszuwerten. In diesem Zusammenhang kann es vorteilhaft sein, wenn die Ventil-Steuereinrichtung einer jeweiligen Ventilvorrichtung dazu eingerichtet ist, Prozess-und/oder Zustandsdaten der ihr zugeordneten Ventilvorrichtung, insbesondere direkt, an die Hauptsteuereinrichtung der Unterdruckerzeugungseinrichtung zu senden. Zusätzlich oder alternativ kann die Hauptsteuereinrichtung dazu eingerichtet sein, Steuersignale zum Ansteuern der Ventilvorrichtung oder Ventilvorrichtungen an die jeweilige Ventil-Steuereinheit der Ventilvorrichtung zusenden. Bei den Steuersignalen kann es sich insbesondere um Signale zum Ansteuern des Aktors und somit zum Schalten der Ventilvorrichtung handeln. Bei einer solchen Ausgestaltung kann insofern die gemeinsame Unterdruckerzeugungseinrichtung den Zustand der Ventilvorrichtungen überwachen und gegebenenfalls - beispielsweise bei Gefahrensituationen - die Ventilvorrichtungen individuell ansteuern. Eine solche Hauptsteuereinrichtung hat zudem den Vorteil, dass Zustandsdaten zentral eingelesen und verarbeitet werden können, sodass Fehlfunktionen zentral ausgewertet werden können.

Die Erfindung wird im Folgenden anhand der Figuren näher erläutert. Es zeigen:
- Fig. 1: eine skizzierte Darstellung einer Ausgestaltung der Ventilvorrichtung in einer perspektivischen Ansicht;
- Fig. 2: eine schematische Schnittdarstellung der Ventilvorrichtung gemäß Fig. 1 mit Ventilkörper in Saugstellung;
- Fig. 3: eine schematische Schnittdarstellung der Ventilvorrichtung gemäß Fig. 1 mit Ventilkörper in Belüftungsstellung;
- Fig. 4: ein schematischer Schaltplan einer beispielhaften Ausgestaltung einer Unterdruckhandhabungsvorrichtung;
- Fig. 5: eine schematische Darstellung zur Erläuterung einer beispielhaften Betriebssituation der Unterdruckhandhabungsvorrichtung gemäß Fig. 4; und
- Fig. 6: eine schematische Darstellung zur Erläuterung einer beispielhaften Betriebssituation der Unterdruckhandhabungsvorrichtung gemäß Fig. 4.

In der nachfolgenden Beschreibung sowie in den Figuren sind für identische oder einander entsprechende Merkmale jeweils dieselben Bezugszeichen verwendet.

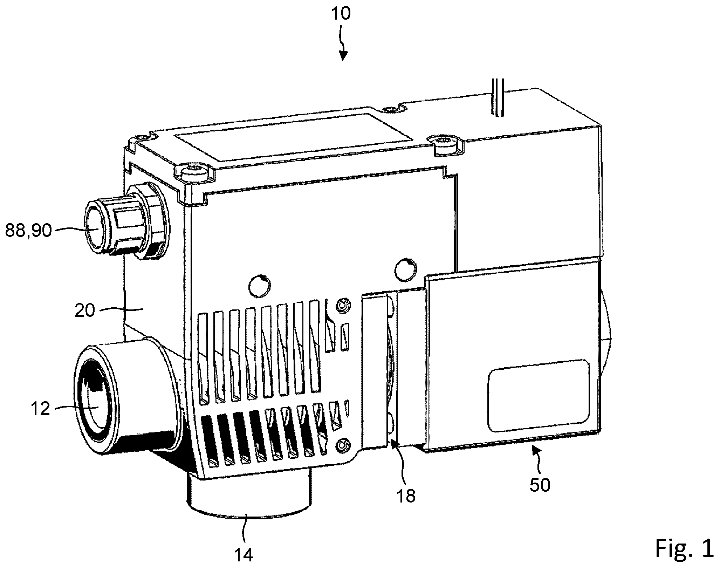

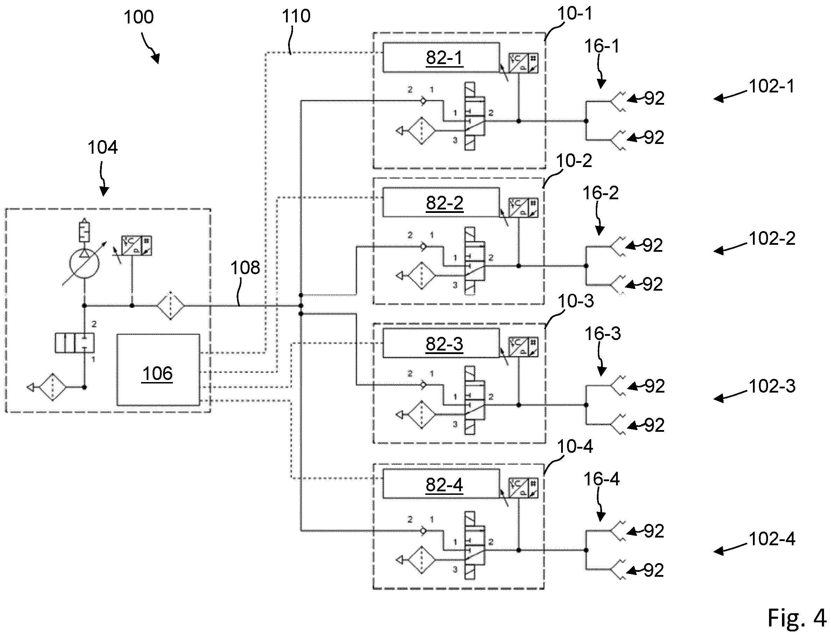

Die Figur 1 zeigt eine Ausgestaltung einer Ventilvorrichtung, welche insgesamt mit dem Bezugszeichen 10 bezeichnet ist. Die Ventilvorrichtung 10 umfasst einen Unterdruckanschluss 12 zum Anschluss einer externen Unterdruckversorgung, einen Sauganschluss 14 zum Anschluss an eine Sauggreifvorrichtung 16 (vgl. Fig. 4), sowie einen Belüftungsanschluss 18 zum Belüften der Ventilvorrichtung 10. Die Ventilvorrichtung 10 ist dazu ausgebildet, wahlweise eine Strömungsverbindung zwischen dem Unterdruckanschluss 12 und dem Sauganschluss 14 oder zwischen dem Belüftungsanschluss 18 und dem Sauganschluss 14 herzustellen.

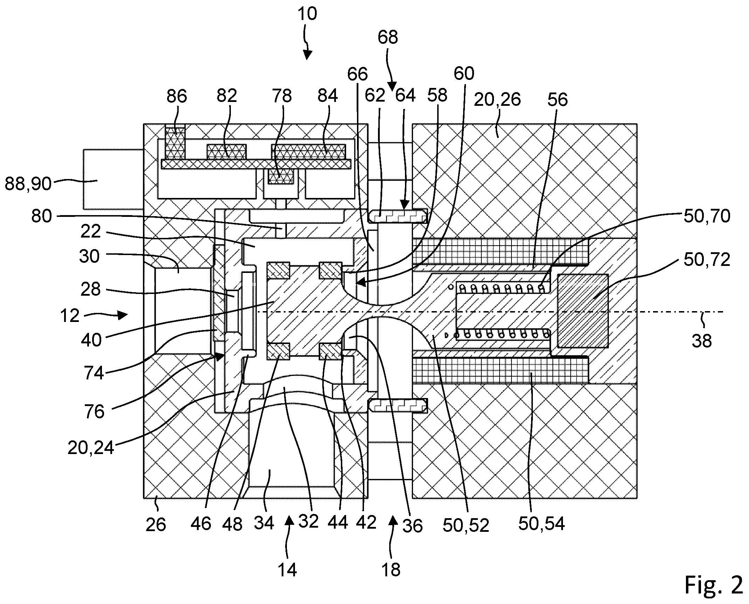

Die Ventilvorrichtung 10 weist ein Ventilgehäuse 20 auf, welches eine Ventilkammer 22 einschließt (vgl. Fig. 2). Im dargestellten Beispiel umfasst das Ventilgehäuse 22 ein Innengehäuse 24, welches die Ventilkammer 22 begrenzt, und ein Außengehäuse 26, welches das Innengehäuse 24 umschließt. Wie bereits erwähnt, ist es beispielsweise denkbar, dass das Innengehäuse 24 in das Außengehäuse 26 eingesteckt ist. Bei nicht dargestellten Ausgestaltungen ist es auch denkbar, dass das Ventilgehäuse 20 einstückig ausgebildet ist.

Wie aus Figur 2 ersichtlich, umfasst die Ventilkammer 22 eine Unterdruckversorgungsöffnung 28, welche über einen Strömungskanal 30 mit dem Unterdruckanschluss 12 strömungsverbunden ist. Die Ventilkammer 22 umfasst außerdem eine Saugöffnung 32, welche über einen Strömungskanal 34 mit dem Sauganschluss 14 strömungsverbunden ist. Die Ventilkammer 22 umfasst außerdem eine Belüftungsöffnung 36 zum Belüften der Ventilkammer 22. Die Belüftungsöffnung 36 ist über den Belüftungsanschluss 18 mit Umgebungsluft versorgbar (nachfolgend noch im Detail erläutert).

In dem dargestellten Beispiel sind die Unterdruckversorgungsöffnung 28, die Saugöffnung 32 und die Belüftungsöffnung 36 jeweils durch eine Aussparung in dem Innengehäuse 24 ausgebildet.

Beispielhaft und bevorzugt sind die Unterdruckversorgungsöffnung 28 und die Belüftungsöffnung 36 koaxial zu einer Schaltachse 38 der Ventilvorrichtung 10 (nachfolgend noch im Detail erläutert) angeordnet. Die Saugöffnung 32 ist beispielhaft zu der Unterdruckversorgungsöffnung 28 und der Belüftungsöffnung 36 orthogonal orientiert.

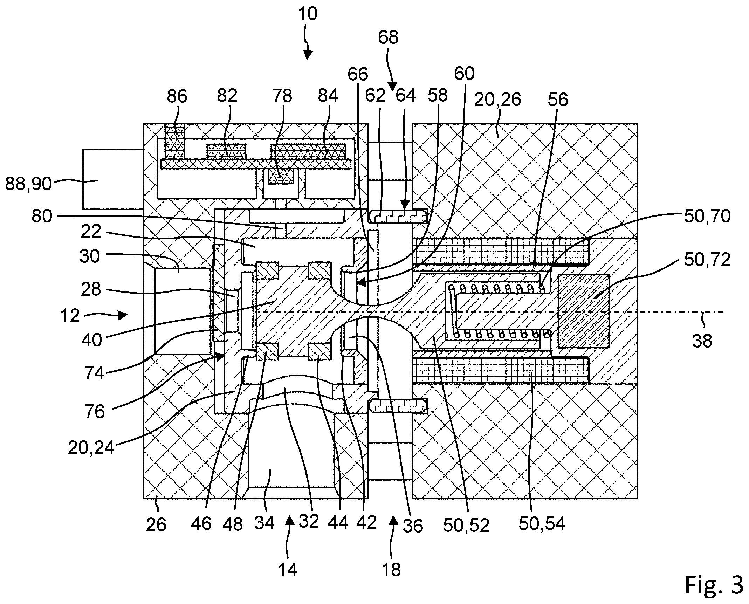

Die Ventilvorrichtung 10 umfasst außerdem einen Ventilkörper 40, welcher in der Ventilkammer 22 angeordnet ist. Der Ventilkörper 40 ist entlang der Schaltachse 38 zwischen einer Saugstellung (vgl. Fig. 2) und einer Belüftungsstellung (vgl. Fig. 3) verlagerbar.

In der Saugstellung ist der Ventilkörper 40 derart angeordnet, dass er die Belüftungsöffnung 36 verschließt und gleichzeitig eine Strömungsverbindung zwischen Unterdruckversorgungsöffnung 28 und Saugöffnung 32 freigegeben ist (vgl. Fig. 2). In dieser Schaltstellung der Ventilvorrichtung 10 kann eine an dem Sauganschluss 14 angeschlossene Sauggreifvorrichtung 16 mit Unterdruck versorgt und somit beispielsweise ein Gegenstand angesaugt werden. Im konkreten Beispiel liegt der Ventilkörper 40 in der Saugstellung an einem ersten Ventilsitz 42 dichtend an. Zu diesem Zweck umfasst der Ventilkörper 40 im dargestellten Beispiel eine erste Dichteinrichtung 44, beispielsweise in Form eines O-Rings.

In der Belüftungsstellung (vgl. Fig. 3) ist der Ventilkörper 40 derart angeordnet, dass er die Unterdruckversorgungsöffnung 28 verschließt und gleichzeitig eine Strömungsverbindung zwischen Belüftungsöffnung 36 und Saugöffnung 32 freigegeben ist. In dieser Schaltstellung der Ventilvorrichtung 10 kann eine am Sauganschluss 14 angeschlossene Sauggreifvorrichtung 16 über die Belüftungsöffnung 36 wieder belüftet werden und auf diese Weise beispielsweise der Gegenstand abgelegt werden. Im konkreten Beispiel liegt der Ventilkörper 40 in der Belüftungsstellung an einem zweiten Ventilsitz 46 dichtend an. Zu diesem Zweck umfasst der Ventilkörper 40 eine zweite Dichteinrichtung 48, beispielsweise in Form eines O-Rings.

Die Ventilvorrichtung 10 umfasst außerdem einen Aktor 50 zum Antreiben einer Verlagerungsbewegung des Ventilkörpers 40 entlang der Schaltachse 38. Der Aktor 50 ist insofern zum Schalten der Ventilvorrichtung 10 ausgebildet.

Der Aktor 50 umfasst einen Anker 52 und eine elektromagnetische Spule 54 zum Antreiben einer Verlagerungsbewegung des Ankers 52 entlang der Schaltachse 38. Der Anker 52 umfasst insbesondere ein magnetisch polarisierbares, insbesondere ferromagnetisches, Material. Bei dem Anker 52 handelt es insofern insbesondere um einen Magnetanker. Durch Bestromen der Spule 54 kann der Anker 52 und somit der Ventilkörper 40 zwischen der Saugstellung (vgl. Fig. 2) und der Belüftungsstellung (vgl. Fig. 3) verlagert werden. Wie aus Figur 2 ersichtlich, ist der Anker vorzugsweise in einer Laufhülse 56 im Ventilgehäuse 20 geführt.

Im konkreten Beispiel ist der Anker 52 einstückig mit dem Ventilkörper 40 ausgebildet. Bei nicht dargestellten Ausgestaltungen ist es aber auch denkbar, dass der Anker 52 und der Ventilkörper separat bereitgestellte Bauteile sind, welche miteinander verbunden sind.

Beispielhaft und bevorzugt dringt der Anker 52 durch die Belüftungsöffnung 36 in die Ventilkammer 22 ein. Vorzugsweise ist der Anker 52 im Bereich der Belüftungsöffnung 36 derart radial verjüngt, dass zwischen dem Anker 52 und einer die Belüftungsöffnung 36 begrenzenden Wandung 58 ein Belüftungsspalt 60 gebildet ist, welcher den Anker 52 um die Schaltachse 38, im Beispiel vollständig, umläuft (vgl. Fig. 2).

Wie aus Figur 2 ersichtlich, umfasst der Belüftungsanschluss 18 einen Filter 62, um einströmende Umgebungsluft zu filtern. Beispielhaft und bevorzugt ist der Filter 62 in Form eines Filterzylinders ausgebildet, welcher die Schaltachse 38 und den Anker 52 radial umschließt. Im Konkreten weist der Filter 62 eine Filtermantelfläche 64 und eine mit der Belüftungsöffnung 36 strömungsverbundene axiale Filteröffnung 66. Wie aus Figur 2 ersichtlich, weist das Ventilgehäuse 20 im Bereich des Filters 62 eine Aussparung 68 derart auf, dass die Filtermantelfläche 64 entlang eines Großteils ihres Umfangs um die Schaltachse 38, im Beispiel entlang ihres kompletten Umfangs um die Schaltachse 38, von Umgebungsluft durchströmbar ist.

Der Aktor 50 ist bistabil ausgebildet, sodass der Anker 52 und somit der Ventilkörper 40 in den beiden Endlagen (Saugstellung und Belüftungsstellung) fixiert sind, ohne dass die Spule 54 bestromt ist. Im konkreten Beispiel umfasst der Aktor 50 eine Federeinrichtung 70, beispielhaft in Form einer Schraubenfeder, welche den Anker 52 und somit den Ventilkörper 40 in Richtung der Belüftungsstellung beaufschlagt (vgl. Fig. 3). Der Aktor 50 umfasst außerdem einen Permanentmagnet 72, welcher dazu ausgebildet ist, den Anker 52 und somit den Ventilkörper 40 in der Saugstellung entgegen der Federkraft der Federeinrichtung 70 festzuhalten (vgl. Fig. 2). Insofern muss die Spule 54 lediglich kurzzeitig zum Umschalten der Ventilvorrichtung 10 bestromt werden.

Bei nicht dargestellten Ausgestaltungen ist es auch denkbar, dass der Aktor 50 einen ersten Permanentmagnet umfasst, welcher den Anker 52 in der Saugstellung festhält, und einen zweiten Permanentmagnet, welcher den Anker 52 in der Belüftungsstellung festhält.

Wie aus Figur 2 ersichtlich, umfasst die Ventilvorrichtung 10 außerdem eine Rückschlagklappe 74 zum Öffnen und Schließen der Unterdruckversorgungsöffnung 28. Im konkreten Beispiel ist die Rückschlagklappe 74 an einer Außenwand 76 des Innengehäuses 24 angeordnet. Die Figur 2 zeigt die Rückschlagklappe 74 dabei in einer Geschlossenstellung, in welcher die Rückschlagklappe 74 die Unterdruckversorgungsöffnung 28 verschließt. Die Rückschlagklappe 74 ist derart ausgebildet, dass sie ausgehend von dieser Geschlossenstellung in eine Offenstellung überführbar ist, in welcher die Unterdruckversorgungsöffnung 28 zumindest abschnittsweise geöffnet ist. Im Konkreten ist die Rückschlagklappe 74 insbesondere derart ausgebildet, dass sie durch Beaufschlagen des Unterdruckanschlusses 12 mit Unterdruck und einen damit verbundenen Luftstrom von Unterdruckversorgungsöffnung 28 zu Unterdruckanschluss 14 in Richtung von der Ventilkammer 22 weg aufklappbar ist und somit in die Offenstellung überführbar ist.

Die Ventilvorrichtung 10 umfasst außerdem eine Sensoreinrichtung 78, welche dazu ausgebildet ist, einen in der Ventilkammer 22 vorherrschenden Druck zu detektieren. Zu diesem Zweck ist die Sensoreinrichtung 78 mit der Ventilkammer 22 über eine Sensoröffnung 80 strömungsverbunden.

Die Ventilvorrichtung 10 umfasst vorzugsweise außerdem eine mit der Sensoreinrichtung 78 zusammenwirkende Steuereinrichtung 82, welche dazu ausgebildet ist, den Aktor 50, insbesondere in Abhängigkeit eines Signals der Sensoreinrichtung 78, anzusteuern.

Wie vorstehend erwähnt, umfasst die Ventilvorrichtung 10 vorzugsweise außerdem eine mit der Sensoreinrichtung 78 und der Steuereinrichtung 82 zusammenwirkende Auswerteeinrichtung 84.

Wie aus Figur 2 ersichtlich, sind die Sensoreinrichtung 78, die Steuereinrichtung 82 und die Auswerteeinrichtung 84 vorzugsweise in dem Ventilgehäuse 20 angeordnet und somit vor Umgebungseinflüssen geschützt. Optional kann außerdem eine Zustandsanzeige 86, beispielsweise in Form einer LED oder eines Displays, vorgesehen sein, welche dazu ausgebildet ist, einem Bediener Zustands- und Prozessinformationen anzuzeigen.

Die Sensoreinrichtung 78, die Steuereinrichtung 82, die Auswerteeinrichtung 84 und/oder die Zustandsanzeige 86 können Teil einer Steuerplatine sein.

Wie vorstehend erwähnt, umfasst die Ventilvorrichtung 10 außerdem eine Kommunikationsschnittstelle 88 zur Kommunikation mit einer externen Auswerte- oder Steuereinheit (z.B. mit der Hauptsteuereinrichtung 106 einer Unterdruckerzeugungs-einrichtung 104, siehe unten).

Im konkreten Beispiel umfasst die Kommunikationsschnittstelle 88 einen Steckeranschluss 90. Alternativ oder zusätzlich kann die Kommunikationsschnittstelle 88 auch eine drahtlose Kommunikationseinrichtung, beispielsweise in Form einer NFC-Antenne, aufweisen.

Im Folgenden wird die Verwendung einer vorstehend beschriebenen Ventilvorrichtung 10 in einer Unterdruckhandhabungsvorrichtung 100 unter Bezugnahme auf die Figuren 4 bis 6 beschrieben.

Die Figur 4 zeigt - in Form eines schematischen Schaltplans - eine Unterdruckhandhabungsvorrichtung, welche insgesamt mit dem Bezugszeichen 100 bezeichnet ist. Die Unterdruckhandhabungsvorrichtung 100 umfasst eine oder mehrere, im Beispiel vier Greifereinrichtungen 102-1, 102-2, 102-3, 102-4. Jede Greifereinrichtung 102-1, 102-2, 102-3, 102-4 umfasst eine vorstehend beschriebene Ventilvorrichtung 10-1, 10-2, 10-3, 10-4 sowie eine Sauggreifvorrichtung 16-1, 16-2, 16-3, 16-4. Die Sauggreifvorrichtungen 16-1, 16-2, 16-3, 16-4 weisen beispielhaft jeweils zwei Saugstellen 92 auf.

Die Unterdruckhandhabungsvorrichtung 100 umfasst außerdem eine zentrale, also für alle Greifereinrichtungen 102-1, 102-2, 102-3, 102-4 gemeinsame Unterdruckerzeugungseinrichtung 104. Bei der Unterdruckerzeugungseinrichtung 104 kann es sich beispielsweise um eine elektrische Unterdruckerzeugungseinrichtung 104, wie z.B. ein Gebläse, handeln. Die Unterdruckerzeugungseinrichtung 104 umfasst eine Hauptsteuereinrichtung 106, welche dazu ausgebildet ist, die Ventilvorrichtungen 10-1, 10-2, 10-3, 10-4 anzusteuern.

Wie in Figur 4 dargestellt, ist die Unterdruckerzeugungseinrichtung 104 über entsprechende Fluidleitungen 108 mit den Unterdruckanschlüssen 12 der Ventilvorrichtungen 10-1, 10-2, 10-3, 10-4 strömungsverbunden. Bevorzugt sind die Ventilvorrichtungen 10-1, 10-2, 10-3, 10-4 dabei in Sauggreifer-Nähe angeordnet, was die Totvolumina zwischen Ventilvorrichtung 10-1, 10-2, 10-3, 10-4 und Sauggreifvorrichtung 16 und somit Schaltzeiten reduziert.

Darüber hinaus sind die einzelnen Ventil-Steuereinrichtungen 82-1, 82-2, 82-3, 82-4 über entsprechende Kommunikationsverbindungen 110 (in Fig. 4 mit Strichlinien dargestellt), drahtlos oder drahtgebunden, mit der Hauptsteuereinrichtung 106, insbesondere datentechnisch, verbunden. Beispielsweise ist es denkbar, dass die Ventilvorrichtungen 10-1, 10-2, 10-3, 10-4 über die vorstehend beschriebene jeweilige Kommunikationsschnittstelle 88 mit der Hauptsteuereinrichtung 106 verbunden ist.

Wie vorstehend erwähnt, ist die Hauptsteuereinrichtung 106 dazu eingerichtet, von den Ventil-Steuereinrichtungen 82-1, 82-2, 82-3, 82-4 an die Hauptsteuereinrichtung 106 gesendete Prozess- und/oder Zustandsdaten der Ventilvorrichtungen 10-1, 10-2, 10-3, 10-4 auszuwerten. Die Hauptsteuereinrichtung 106 ist darüber hinaus dazu eingerichtet, Steuersignale zum Ansteuern der Ventilvorrichtungen 10-1, 10-2, 10-3, 10-4 an die Ventil-Steuereinrichtungen 82-1, 82-2, 82-3, 82-4 der Ventilvorrichtungen 10-1, 10-2, 10-3, 10-4 zu übertragen.

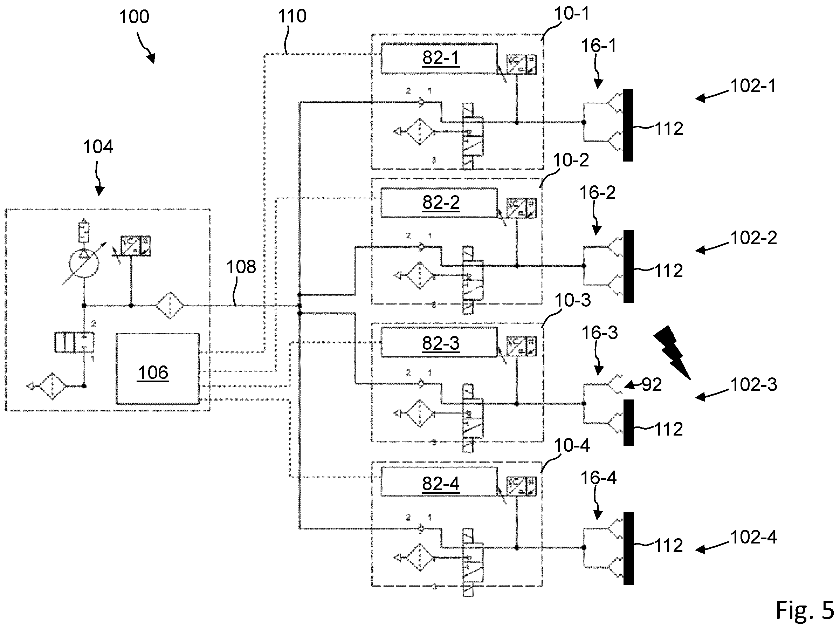

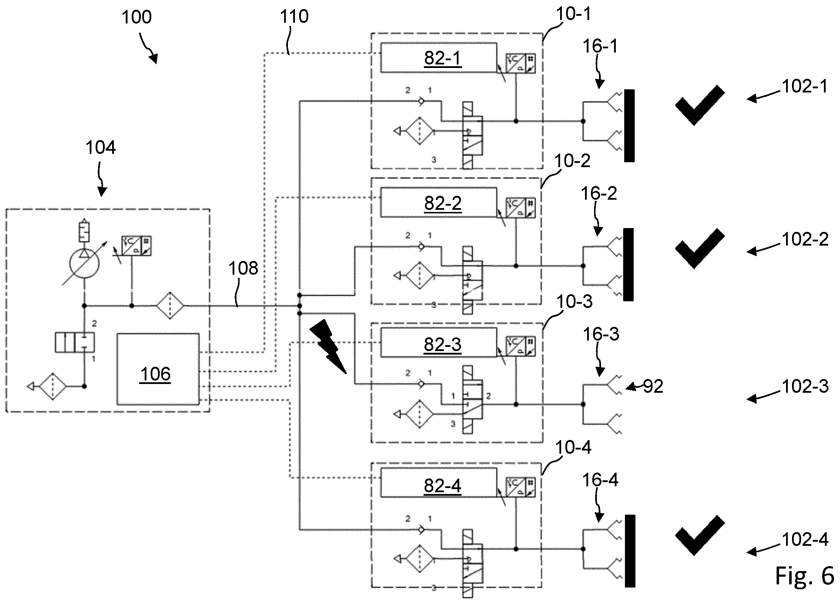

Eine beispielhafte Anwendungssituation der Unterdruckhandhabungsvorrichtung 100 wird im Folgenden anhand der Figuren 5 und 6 näher erläutert.

Die Figur 5 zeigt einen beispielhaften Betriebszustand der Unterdruckhandhabungsvorrichtung 100, bei dem es an einer Saugstelle 92 (im Beispiel an einer der Saugstellen 92 der Sauggreifvorrichtung 16-3 der dritten Greifereinrichtung 102-3) zu einer Leckage kommt, beispielsweise infolge eines unplanmäßigen Abfallens eines Gegenstandes 112. Infolge der Leckage sinkt der Unterdruck in der Ventilkammer 22 der Ventilvorrichtung 10-3 bzw. erhöht sich der Absolutdruck in der Ventilkammer 22.

Da die Greifereinrichtungen 102-1, 102-2, 102-3, 102-4 über die gemeinsamen Fluidleitungen 108 miteinander strömungsverbunden sind, führt der so entstehende Druckunterschied zunächst dazu, dass die Rückschlagklappen 74 der weiteren Ventilvorrichtungen 10-1, 10-2, 10-4 in die jeweilige Geschlossenstellung überführt werden, sodass die mit diesen Ventilvorrichtungen 10-1, 10-2, 10-4 zusammenwirkenden Sauggreifvorrichtungen 16-1, 16-2, 16-4 die Gegenstände 112 weiterhin sicher greifen können.

Die ungeplante Druckänderung in der Ventilvorrichtung 10-3 wird durch die Sensoreinrichtung 78 dieser Ventilvorrichtung 10-3 detektiert und schließlich durch die Ventil-Steuereinrichtung 82-3 dieser Ventilvorrichtung 10-3 an die Hauptsteuereinrichtung 106 der Unterdruckerzeugungseinrichtung 104 gemeldet. Die Hauptsteuereinrichtung 106 kann dann über die entsprechende Kommunikationsverbindung 110 zu der Ventilvorrichtung 10-3 ein Steuersignal an die Ventil-Steuereinrichtung 82-3 dieser Ventilvorrichtung 10-3 senden, um die Ventilvorrichtung 10-3 zu belüften, also den Ventilkörper 40 aus der Saugstellung in die Belüftungsstellung zu überführen (vgl. Fig. 6). In der Belüftungsstellung ist dann die Unterdruckversorgungsöffnung 12 abgedichtet, sodass die Leckage an der Sauggreifvorrichtung 10-3 nicht mehr auf die Fluidleitungen 108 und somit nicht mehr auf die weiteren Greifereinrichtungen 102-1, 102-2, 102-4 übertragen wird, sodass für diese Greifereinrichtungen 102-1, 102-2, 102-4 wieder ein sicherer Greifzustand hergestellt ist (in Fig. 6 durch die schwarzen Haken illustriert). Sind - wie im Beispiel - an der mit Leckage behafteten Sauggreifvorrichtung 16-3 weitere Gegenstände 112 gehalten, können diese ggf. zum Schutz aller anderen gehaltenen Gegenstände 112 geopfert werden.

Wie vorstehend erwähnt, ist es auch denkbar, dass die ungeplante Druckänderung in der Ventilvorrichtung 10-3 durch die Sensoreinrichtung 78 dieser Ventilvorrichtung 10-3 detektiert wird und die Steuereinrichtung 82-3 dieser Ventilvorrichtung 10-3 dann den Aktor direkt - also ohne Zwischenschaltung der Hauptsteuereinrichtung 106 - ansteuert.

## Patentansprüche

1. Ventilvorrichtung (10) für Unterdruckanwendungen, umfassend:
- ein Ventilgehäuse (20), welches eine Ventilkammer (22) begrenzt, die Ventilkammer (22) umfassend
∘ eine Unterdruckversorgungsöffnung (28), welche mit einem Unterdruckanschluss (12) zum Anschluss einer externen Unterdruckversorgung strömungsverbunden ist;
∘ eine Saugöffnung (32), welche mit einem Sauganschluss (14) zum Anschluss einer Sauggreifvorrichtung (16) strömungsverbunden ist; und
∘ eine Belüftungsöffnung (36) zum Belüften der Ventilkammer (22);
- einen Ventilkörper (40), welcher in der Ventilkammer (22) angeordnet ist und entlang einer Schaltachse (38) zwischen einer Saugstellung und einer Belüftungsstellung verlagerbar ist, wobei der Ventilkörper (40) in der Saugstellung die Belüftungsöffnung (36) verschließt und in der Belüftungsstellung die Unterdruckversorgungsöffnung (28) verschließt;
- eine Rückschlagklappe (74) zum Öffnen und Schließen der Unterdruckversorgungsöffnung (28), wobei die Rückschlagklappe (74) eine Geschlossenstellung und eine Offenstellung einnehmen kann, wobei die Rückschlagklappe (74) durch Beaufschlagen des Unterdruckanschlusses (12) mit Unterdruck in die Offenstellung überführbar ist;
**gekennzeichnet durch**:
- einen bistabilen Aktor (50) zum Antreiben einer Verlagerungsbewegung des Ventilkörpers (40) zwischen der Saugstellung und der Belüftungsstellung, umfassend
∘ einen mit dem Ventilkörper (40) verbundenen Anker (52), welcher entlang der Schaltachse (38) verlagerbar ist, wobei der Anker (52) durch die Belüftungsöffnung (36) in die Ventilkammer (22) eindringt und wobei der Anker (52) im Bereich der Belüftungsöffnung (36) derart radial verjüngt ist, dass ein den Anker (52) um die Schaltachse (38) umlaufender Belüftungsspalt (60) gebildet ist; und
∘ eine elektromagnetische Spule (54) zum Antreiben einer Verlagerungsbewegung des Ankers (52) entlang der Schaltachse (38).

2. Ventilvorrichtung (10) nach Anspruch 1, wobei die Rückschlagklappe (74) in dem Ventilgehäuse (20) zwischen Unterdruckversorgungsöffnung (28) und Unterdruckanschluss (12) angeordnet ist

3. Ventilvorrichtung (10) nach einem der vorherigen Ansprüche, wobei das Ventilgehäuse (20) ein Innengehäuse (24), welches die Ventilkammer (22) begrenzt, und ein Außengehäuse (26), welches den Unterdruckanschluss (12) und den Sauganschluss (14) bereitstellt, umfasst.

4. Ventilvorrichtung nach Anspruch 3, wobei die Rückschlagklappe (74) an einer Außenwand (76) des Innengehäuses (24) angeordnet ist, insbesondere derart, dass die Rückschlagklappe (74) durch den Strömungsdruck in Folge einer Beaufschlagung des Unterdruckanschlusses (12) mit Unterdruck zumindest abschnittsweise von der Außenwand (76) abhebbar ist.

5. Ventilvorrichtung (10) nach einem der vorherigen Ansprüche, wobei die Belüftungsöffnung (36) mit einem atmosphärischen Belüftungsanschluss (18) strömungsverbunden ist, wobei der Belüftungsanschluss (18) einen Filter (62), insbesondere in Form eines Filterzylinders, umfasst, welcher die Schaltachse (38), insbesondere den Anker (52), umschließt.

6. Ventilvorrichtung (10) nach dem vorherigen Anspruch, wobei der Filter (62), insbesondere Filterzylinder, eine Filtermantelfläche (64) und eine mit der Belüftungsöffnung (36) strömungsverbundene axiale Filteröffnung (66) aufweist, wobei das Ventilgehäuse (20) im Bereich des Filters (60) eine Aussparung (68) derart aufweist, dass die Filtermantelfläche (64) entlang eines Großteils ihres Umfangs um die Schaltachse (38), vorzugsweise aber entlang ihres kompletten Umfangs um die Schaltachse (38), von Umgebungsluft durchströmbar ist.

7. Ventilvorrichtung (10) nach einem der vorherigen Ansprüche, wobei die Unterdruckversorgungsöffnung (28) und die Belüftungsöffnung (36) einander gegenüberliegend an der Ventilkammer (22) angeordnet sind und/oder wobei die Unterdruckversorgungsöffnung (28) und die Saugöffnung (32) zueinander orthogonal versetzt angeordnet sind.

8. Ventilvorrichtung (10) nach einem der vorherigen Ansprüche, der bistabile Aktor (50) außerdem umfassend:
- eine Federeinrichtung (70), welche den Anker (52) entlang der Schaltachse (38), insbesondere in Richtung der Belüftungsstellung des Ventilkörpers (40), beaufschlagt;
- einen Permanentmagnet (72), welcher den Anker (52) in der Saugstellung oder in der Belüftungsstellung entgegen der Beaufschlagung durch die Federeinrichtung (70) festhält.

9. Ventilvorrichtung (10) nach dem vorherigen Anspruch, wobei die Spule (54), die Federeinrichtung (70) und der Permanentmagnet (72) des Aktors (50) außerhalb der Ventilkammer (22) angeordnet sind.

10. Ventilvorrichtung (10) nach einem der Ansprüche 1 bis 7, der bistabile Aktor (50) außerdem umfassend,
- einen ersten Permanentmagnet, welcher den Anker (52) in der Saugstellung festhält;
- einen zweiten Permanentmagnet, welcher den Anker (52) in der Belüftungsstellung festhält.

11. Ventilvorrichtung (10) nach einem der vorherigen Ansprüche, außerdem umfassend eine Sensoreinrichtung (78), welche dazu ausgebildet ist, einen in der Ventilkammer (22) vorherrschenden Druck zu detektieren, wobei die Ventilkammer (22) eine mit der Sensoreinrichtung (78) strömungsverbundene Sensoröffnung (80) aufweist.

12. Unterdruckhandhabungsvorrichtung (100), umfassend
- eine, insbesondere gemeinsame, Unterdruckerzeugungseinrichtung (104); und
- eine oder mehrere Greifereinrichtungen (102-1, 102-2, 102-3, 102-4), jeweils umfassend eine Sauggreifvorrichtung (16-1, 16-2, 16-3, 16-4) und eine Ventilvorrichtung (10-1, 10-2, 10-3, 10-4) nach einem der vorherigen Ansprüche, wobei die Sauggreifvorrichtung (16-1, 16-2, 16-3, 16-4) mit dem Sauganschluss (14) der Ventilvorrichtung (10-1, 10-2, 10-3, 10-4) strömungsverbunden ist, wobei die Unterdruckerzeugungseinrichtung (104) mit dem Unterdruckanschluss (12) der Ventilvorrichtung (10-1, 10-2, 10-3, 10-4) strömungsverbunden ist, und wobei die Unterdruckerzeugungseinrichtung (104) mit der Ventilvorrichtung (10-1, 10-2, 10-3, 10-4) über eine Kommunikationsverbindung (110), insbesondere Datenleitung, insbesondere datentechnisch, verbunden ist.

13. Unterdruckhandhabungsvorrichtung (100) nach dem vorherigen Anspruch, wobei jede Ventilvorrichtung (10-1, 10-2, 10-3, 10-4) eine eigene Ventil-Steuereinrichtung (82-1, 82-2, 82-3, 82-4) aufweist und wobei die Unterdruckerzeugungseinrichtung (104) eine Hauptsteuereinrichtung (106) aufweist, wobei die Ventil-Steuereinrichtung (82-1, 82-2, 82-3, 82-4) einer jeweiligen Ventilvorrichtung (10-1, 10-2, 10-3, 10-4) dazu eingerichtet ist, Prozess- und/oder Zustandsdaten der Ventilvorrichtung (10-1, 10-2, 10-3, 10-4) an die Hauptsteuereinrichtung (106) der Unterdruckerzeugungseinrichtung (104) zu senden und wobei die Hauptsteuereinrichtung (106) dazu eingerichtet ist, diese Prozess- und/oder Zustandsdaten datentechnisch zu verarbeiten, insbesondere auszuwerten, und wobei die Hauptsteuereinrichtung dazu eingerichtet ist, Steuersignale zum Ansteuern der Ventilvorrichtungen (10-1, 10-2, 10-3, 10-4), insbesondere zur Betätigung des Aktors (50) der Ventilvorrichtung, direkt an die jeweilige Ventil-Steuereinrichtung (82-1, 82-2, 82-3, 82-4) der Ventilvorrichtungen 10-1, 10-2, 10-3, 10-4) zu senden.

## Claims

1. Valve apparatus (10) for vacuum applications, comprising:
- a valve housing (20) delimiting a valve chamber (22), the valve chamber (22) comprising
∘ a vacuum supply opening (28) which is fluidically connected to a vacuum connection (12) for connecting an external vacuum source;
∘ a suction opening (32) which is fluidically connected to a suction connection (14) for connecting a suction grip device (16); and
∘ a ventilation opening (36) for ventilating the valve chamber (22);
- a valve body (40) which is arranged in the valve chamber (22) and can be moved along a switching axis (38) between a suction position and a ventilation position, wherein the valve body (40) in the suction position closes the ventilation opening (36) and in the ventilation position closes the vacuum supply opening (28);
- a swing check valve (74) for opening and closing the vacuum supply opening (28), wherein the swing check valve (74) can assume a closed position and an open position,
wherein the swing check valve (74) can be transferred into the open position by applying vacuum to the vacuum connection (12);
**characterized by**:
- a bistable actuator (50) for driving a displacement movement of the valve body (40) between the suction position and the ventilation position, comprising
∘ an armature (52) connected to the valve body (40) and displaceable along the switching axis (38), wherein the armature (52) penetrates through the ventilation opening (36) into the valve chamber (22) and wherein the armature (52) tapers radially in the region of the ventilation opening (36) in such a way that a venting gap (60) is formed surrounding the armature (52) around the switching axis (38); and
∘ an electromagnetic coil (54) for driving a displacement movement of the armature (52) along the switching axis (38).

2. Valve apparatus (10) according to claim 1, wherein the swing check valve (74) is arranged in the valve housing (20) between the vacuum supply opening (28) and the vacuum connection (12).

3. Valve apparatus (10) according to one of the preceding claims, wherein the valve housing (20) comprises an inner housing (24) which delimits the valve chamber (22), and an outer housing (26) which provides the vacuum connection (12) and the suction connection (14).

4. Valve apparatus according to claim 3, wherein the swing check valve (74) is arranged on an outer wall (76) of the inner housing (24), and in particular in such a way that the swing check valve (74) can be lifted off the outer wall (76), at least in portions, by the flow pressure as a result of a vacuum being applied to the vacuum connection (12).

5. Valve apparatus (10) according to one of the preceding claims, wherein the ventilation opening (36) is fluidically connected to an atmospheric ventilation connection (18), wherein the ventilation connection (18) comprises a filter (62) - in particular, in the form of a filter cylinder - which surrounds the switching axis (38), and in particular the armature (52).

6. Valve apparatus (10) according to the preceding claim, wherein the filter (62), and in particular filter cylinder, has a peripheral filter surface (64) and an axial filter opening (66) fluidically connected to the ventilation opening (36), wherein the valve housing (20) has a recess (68) in the region of the filter (60) such that ambient air can flow through the peripheral filter surface (64) along a majority of its circumference around the switching axis (38), but preferably along its entire circumference around the switching axis (38).

7. Valve apparatus (10) according to one of the preceding claims, wherein the vacuum supply opening (28) and the ventilation opening (36) are arranged opposite one another on the valve chamber (22) and/or wherein the vacuum supply opening (28) and the suction opening (32) are arranged offset orthogonally to one another.

8. Valve apparatus (10) according to one of the preceding claims, the bistable actuator (50) further comprising:
- a spring device (70) which bears on the armature (52) along the switching axis (38), and in particular in the direction of the ventilation position of the valve body (40);
- a permanent magnet (72) which holds the armature (52) in the suction position or in the ventilation position against the force of the spring device (70).

9. Valve apparatus (10) according to the preceding claim, wherein the coil (54), the spring device (70), and the permanent magnet (72) of the actuator (50) are arranged outside the valve chamber (22).

10. Valve apparatus (10) according to one of claims 1 through 7, the bistable actuator (50) further comprising:
- a first permanent magnet which holds the armature (52) in the suction position;
- a second permanent magnet which holds the armature (52) in the ventilation position.

11. Valve apparatus (10) according to one of the preceding claims, further comprising a sensor device (78) which is designed to detect a pressure prevailing in the valve chamber (22), wherein the valve chamber (22) has a sensor opening (80) fluidically connected to the sensor device (78).

12. Vacuum handling apparatus (100), comprising
- an - in particular, shared - vacuum generating device (104); and
- one or more gripper devices (102-1, 102-2, 102-3, 102-4), each comprising a suction grip device (16-1, 16-2, 16-3, 16-4), and a valve apparatus (10-1, 10-2, 10-3, 10-4) according to one of the preceding claims, wherein the suction grip device (16-1, 16-2, 16-3, 16-4) is fluidically connected to the suction connection (14) of the valve apparatus (10-1, 10-2, 10-3, 10-4), wherein the vacuum generating device (104) is fluidically connected to the vacuum connection (12) of the valve apparatus (10-1, 10-2, 10-3, 10-4), and wherein the vacuum generating device (104) is connected to the valve apparatus (10-1, 10-2, 10-3, 10-4) via a communications connection (110) - in particular, data line, and in particular for data exchange.

13. Vacuum handling apparatus (100) according to the preceding claim, wherein each valve apparatus (10-1, 10-2, 10-3, 10-4) has its own valve control device (82-1, 82-2, 82-3, 82-4), and wherein the vacuum generating device (104) has a main control device (106), wherein the valve control device (82-1, 82-2, 82-3, 82-4) of a corresponding valve apparatus (10-1, 10-2, 10-3, 10-4) is configured to transmit process and/or state data of the valve apparatus (10-1, 10-2, 10-3, 10-4) to the main control device (106) of the vacuum generating device (104), and wherein the main control device (106) is configured to process, and in particular evaluate, process and/or state data, and wherein the main control device is configured to transmit control signals for actuating the valve apparatuses (10-1, 10-2, 10-3, 10-4), and in particular for actuating the actuator (50) of the valve apparatus, directly to the corresponding valve control devices (82-1, 82-2, 82-3, 82-4) of the valve apparatuses (10-1, 10-2, 10-3, 10-4).

## Revendications

1. Dispositif de vanne (10) pour des applications à dépression, comprenant:
- un boîtier de vanne (20) qui délimite une chambre de vanne (22), ladite chambre de vanne (22) comprenant:
∘ un orifice d'alimentation en dépression (28) qui est relié fluidiquement à un raccord de dépression (12) pour raccorder une alimentation de dépression externe;
∘ un orifice d'aspiration (32) qui est relié fluidiquement à un raccord d'aspiration (14) pour raccorder un dispositif de préhension par aspiration (16); et
∘ un orifice de ventilation (36) pour ventiler la chambre de vanne (22);
- un corps de vanne (40) qui est disposé dans la chambre de vanne (22) et est déplaçable le long d'un axe de commutation (38) entre une position d'aspiration et une position de ventilation, dans lequel, en position d'aspiration, ledit corps de vanne (40) obture l'orifice de ventilation (36) et, en position de ventilation, il obture l'orifice d'alimentation en dépression (28);
- un clapet anti-retour (74) destiné à ouvrir et à fermer l'orifice d'alimentation en dépression (28), dans lequel le clapet anti-retour (74) peut adopter une position fermée ou une position ouverte, dans lequel on peut faire passer le clapet anti-retour (74) à la position ouverte en appliquant une dépression au raccord de dépression (12),
**caractérisé par**:
- un actionneur bistable (50) destiné à entraîner un mouvement de déplacement du corps de vanne (40) entre la position d'aspiration et la position de ventilation, comprenant
∘ une armature (52) qui est reliée au corps de vanne (40) et qui est déplaçable le long de l'axe de commutation (38), dans lequel l'armature (52) pénètre dans la chambre de vanne (22) par l'orifice de ventilation (36) et dans lequel l'armature (52) est rétrécie radialement au niveau de l'orifice de ventilation (36) de manière à former ainsi un jeu de ventilation (60) entourant l'armature (52) autour de l'axe de commutation (38); et
∘ une bobine électromagnétique (54) destiné à entraîner un mouvement de déplacement de l'armature (52) le long de l'axe de commutation (38).

2. Dispositif de vanne (10) selon la revendication 1, dans lequel le clapet anti-retour (74) est disposé dans le boîtier de vanne (20) entre l'orifice d'alimentation en dépression (28) et le raccord de dépression (12).

3. Dispositif de vanne (10) selon l'une quelconque des revendications précédentes, dans lequel le boîtier de vanne (20) comprend un boîtier intérieur (24) qui délimite la chambre de vanne (22) et un boîtier extérieur (26) qui fournit le raccord de dépression (12) et le raccord d'aspiration (14).

4. Dispositif de vanne selon la revendication 3, dans lequel le clapet anti-retour (74) est disposé sur une paroi extérieure (76) du boîtier intérieur (24), en particulier de manière à ce que le clapet anti-retour (74) puisse être soulevé, au moins par sections, de la paroi extérieure par la pression d'écoulement résultant d'une application d'une dépression au raccord de dépression (12).

5. Dispositif de vanne (10) selon l'une quelconque des revendications précédentes, dans lequel l'orifice de ventilation (36) est relié fluidiquement à un raccord de ventilation atmosphérique (18), dans lequel ledit raccord de ventilation (18) comprend un filtre (62), en particulier sous la forme d'un cylindre filtrant, qui entoure l'axe de commutation (38), en particulier l'armature (52).

6. Dispositif de vanne (10) selon la revendication précédente, dans lequel le filtre (62), en particulier le cylindre filtrant, présente une surface latérale de filtre (64) et une ouverture axiale de filtre (66) reliée fluidiquement à l'orifice de ventilation (36), dans lequel le boîtier de vanne (20) comprend un évidement (68) au niveau du filtre (60) de telle sorte que la surface latérale de filtre (64) puisse être traversée par l'air ambiant sur une grande partie de sa circonférence autour de l'axe de commutation (38), mais de préférence sur toute sa circonférence autour de l'axe de commutation (38).

7. Dispositif de vanne (10) selon l'une quelconque des revendications précédentes, dans lequel l'orifice d'alimentation en dépression (28) et l'orifice de ventilation (36) sont disposés face à face sur la chambre de vanne (22) et/ou dans lequel l'orifice d'alimentation en dépression (28) et l'orifice d'aspiration (32) sont disposés de manière à être décalées orthogonalement l'une par rapport à l'autre.

8. Dispositif de vanne (10) selon l'une quelconque des revendications précédentes, l'actionneur bistable (50) comprenant en outre:
- un ensemble formant ressort (70) qui agit sur l'armature (52) le long de l'axe de commutation (38), en particulier dans le sens de la position de ventilation du corps de vanne (40);
- un aimant permanent (72) qui maintient l'armature (52) en position d'aspiration ou en position de ventilation, en opposition à l'action de l'ensemble formant ressort (70).

9. Dispositif de vanne (10) selon la revendication précédente, dans lequel la bobine (54), l'ensemble formant ressort (70) et l'aimant permanent (72) de l'actionneur (50) sont disposés à l'extérieur de la chambre de vanne (22).

10. Dispositif de vanne (10) selon l'une quelconque des revendications 1 à 7, l'actionneur bistable (50) comprenant en outre:
- un premier aimant permanent qui maintient l'armature (52) en position d'aspiration;
- un deuxième aimant permanent qui maintien l'armature (52) en position de ventilation.

11. Dispositif de vanne (10) selon l'une quelconque des revendications précédentes, comprenant en outre un dispositif de capteur (78) qui est configuré pour détecter une pression régnant dans la chambre de vanne (22), dans lequel la chambre de vanne (22) présente un orifice de capteur (80) relié fluidiquement au dispositif de capteur (78).

12. Dispositif de manipulation par dépression (100), comprenant:
- un dispositif de génération de dépression (104), en particulier commun; et
- un ou plusieurs dispositifs de préhension (102-1, 102-2, 102-3, 102-4), chacun comprenant un dispositif de préhension par aspiration (16-1, 16-2, 16-3, 16-4) et un dispositif de vanne (10-1, 10-2, 10-3, 10-4) selon l'une quelconque des revendications précédentes, le dispositif de préhension par aspiration (16-1, 16-2, 16-3, 16-4) étant relié fluidiquement au raccord d'aspiration (14) du dispositif de vanne (10-1, 10-2, 10-3, 10-4), le dispositif de génération de dépression (104) étant relié fluidiquement au raccord de dépression (12) du dispositif de vanne (10-1, 10-2, 10-3, 10-4), et le dispositif de génération de dépression (104) étant connecté au dispositif de vanne (10-1, 10-2, 10-3, 10-4) par une liaison de communication (110), en particulier une ligne de données, en particulier en termes de données.

13. Dispositif de manipulation par dépression (100) selon la revendication précédente, dans lequel chaque dispositif de vanne (10-1, 10-2, 10-3, 10-4) possède un propre dispositif de commande de vanne (82-1, 82-2, 82-3, 82-4) et dans lequel le dispositif de génération de dépression (104) comprend un dispositif de commande principale (106), dans lequel le dispositif de commande de vanne (82-1, 82-2, 82-3, 82-4) d'un dispositif de vanne (10-1, 10-2, 10-3, 10-4) respectif est configuré pour transmettre des données de processus et/ou d'état dudit dispositif de vanne (10-1, 10-2, 10-3, 10-4) au dispositif commande principale (106) du dispositif de génération de dépression (104), et dans lequel le dispositif de commande principale (106) est configuré pour traiter en termes de données, en particulier évaluer, ces données de processus et/ou d'état, et dans lequel le dispositif de commande principale est configuré pour envoyer des signaux de commande destinés à commander les dispositifs de vanne (10-1, 10-2, 10-3, 10-4), en particulier pour actionner l'actionneur (50) du dispositif de vanne, directement au dispositif de commande de vanne (82-1, 82-2, 82-3, 82-4) respectif des dispositifs de vanne (10-1, 10-2, 10-3, 10-4).
